# FASCICULE DE BREVET EUROPEEN

(11) **EP 0 481 890 B1**
(45) Date de publication et mention de la délivrance du brevet: **27.12.1996**
(21) Numéro de dépôt: 91402766.9
(22) Date de dépôt: 16.10.1991
(51) Int. Cl.: C08F 214/06

(54) **Polymères et resines à base de chlorure de vinyle à grains lisses et à homogénéite de structure interne améliorée, leur procédé de préparation**
Polymere und Kunstharze auf Basis von Polyvinylchlorid als glatte Kügelchen mit innerer Struktur von verbesserter Homogenität und Verfahren ihrer Herstellung
Polymers and resins based on polyvinyl chloride being smooth grains with an internal structure of improved homogeneity and procedure of their preparation

(30) Priorité: 19.10.1990 FR 9012968
(43) Date de publication de la demande: 22.04.1992
(73) Titulaire: ELF ATOCHEM S.A., 92800 Puteaux (FR)
(72) Inventeur: Chauvin, Camille, F-27300 Bernay (FR); Mailhos-Lefievre Valerie, F-60500 Chantilly (FR); Nogues, Pierre, F-27300 Bernay (FR)

(56) Documents cités:
- DE-A- 3 312 255
- FR-A- 2 612 520
- GB-A- 1 141 582

## Description

L'invention objet de la présente demande concerne des polymères vinyliques copolymères de chlorure de vinyle) dont les grains présentent une enveloppe lisse ainsi qu'une bonne homogénéité de garnissage, une régularité de la répartition des cavités et des particules élémentaires à l'intérieur des grains.

Les résines vinyliques selon l'invention sont des copolymères à base de chlorure de vinyle qui sont insolubles dans la composition comonomère dont ils dérivent.

Ils sont constitués d'au moins 50% en poids de chlorure de vinyle et d'acrylamide jusqu'à 5% en poids et éventuellement d'au moins un comonomère choisi dans le groupe formé par le chlorure de vinylidène, le tétrafluoroéthylène, le chlorotrifluoroéthylène, les acrylates d'alkyle tels l'acrylate de méthyle, les méthacrylates d'alkyle tels le méthacrylate de méthyle, les oléfines telles l'éthylène, le propylène , pourvu que le copolymère formé soit essentiellement insoluble dans la composition comonomère qui n'a pas réagi.

Selon l'invention on peut employer plus particulièrement des polymères issus de compositions comonomères contenant jusqu'à 5% en poids d'acrylamide et choisies dans le groupe formé par le chlorure de vinyle pris isolément; les compositions à base de chlorure de vinyle et d'au moins une oléfine telle l'éthylène, le propylène, le butène-1, le butène-2, l'isobutène, le méthyle, 4-pentène, 1; les compositions à base de chlorure de vinyle et d'acétate de vinyle; les compositions à base de chlorure de vinyle et de chlorure de vinylidène, pourvu que le polymère formé soit essentiellement insoluble dans la composition comonomère.

A titre d'exemples non limitatifs de polymères selon l'invention on peut citer ceux qui dérivent :
- des compositions comonomères à base de chlorure de vinyle contenant jusqu'à 5% en poids d'acrylamide et d'au moins une oléfine comprenant de 0,1 à 30% et de préférence de 0,1 à 10% en poids de ladite oléfine,
- des compositions comonomères à base de chlorure de vinyle contenant jusqu'à 5% en poids d'acrylamide et comprenant de 0,1 à 30% et de préférence de 0,1 à 15% en poids d'acétate de vinyle,
- des compositions comonomères à base de chlorure de vinyle contenant jusqu'à 5% en poids d'acrylamide et comprenant de 0,1 à 30% et de préférence de 0,1 à 20% en poids de chlorure de vinylidène.

Les polymères ou résines vinyliques se présentent sous forme de poudre constituée de grains individualisés ou agglomérés dont la surface et la forme varient notamment en fonction du mode de polymérisation employé (masse, suspension, émulsion suspendue).

La coulabilité de ces résines est étroitement liée à la morphologie externe des grains.

On évalue la coulabilité des résines en mesurant par exemple le temps que met une quantité déterminée de poudre pour s'écouler d'un entonnoir de dimensions connues.

Pour des poudres de même diamètre moyen, on comprend aisément que celles qui ont à la fois une forme sphérique et un aspect de surface lisse (avec le minimum d'anfractuosités et de reliefs) s'écouleront plus vite.

La coulabilité de telles résines permet un gain de temps non négligeable lors de leur transformation, par exemple au niveau des cuves d'alimentation en résines mais également de celui des machines de transformation.

Dans les brevets US 4 435 524, 4 603 151, 4 607 058 et 4 684 668 on a décrit la préparation de résines de PVC sphériques par polymérisation en suspension en présence de colloïdes particuliers. Cependant, ces résines bien que sphériques présentent une surface ridée du type balle de golf.

Les grains individualisés ou agglomérés qui constituent les résines vinyliques sont eux-mêmes constitués de particules élémentaires plus ou moins associées entre elles sous forme de paquets et de cavités correspondant à des zones non occupées par la matière.

L'aptitude à la transformation des résines vinyliques dépend de la morphologie des grains.

Ainsi, une résine dont les grains sont constitués de particules élémentaires et de cavités réparties de façon homogène de la périphérie au coeur du grain présente une meilleure aptitude à la transformation qu'une résine dont les particules élémentaires sont regroupées en paquets plus ou moins gros et cohésifs.

D'autre part, les états de division de la matière des grains peuvent influer sur le dégazabilité des résines. Lors du dégazage des monomères on a constaté qu'il est d'autant plus difficile de dégazer les résines vinyliques que les grains contiennent des paquets de particules élémentaires cohésives.

Le procédé de dégazage des résines vinyliques consiste en général à tirer sous vide et à élever la température du milieu réactionnel. Compte-tenu de la fragilité des résines vinyliques vis-à-vis de la température, il est préférable de limiter au maximum les traitements thermiques subis par les résines, c'est-à-dire en pratique limiter la durée du traitement thermique et traiter à la température la plus faible possible.

Une résine contenant peu ou pas de paquets pourra être ainsi dégagée à une température plus faible et/ou pendant une durée plus courte qu'une résine contenant un plus grand nombre de paquets.

Pour apprécier l'aspect de surface des grains on peut calculer leur coefficient de rugosité linéaire par analyse d'images obtenues par examen des grains de poudre par microscopie électronique à balayage (MEB).

L'image observée au M.E.B. est obtenue par récupération des électrons secondaires réémis par le matériau, après excitation des atomes par le faisceau incident. Les électrons secondaires possédant une énergie très faible ( ≃ 50 eV) sont souvent recaptés par le matériau si ils sortent d'une cavité de la surface; la probabilité d'être recaptés est d'autant plus grande que la cavité est profonde. Tous les électrons sortant d'une émergence pourront, eux, atteindre le détecteur. De ce fait, une image de microscopie électronique à balayage obtenue à partir de la détection d'électrons secondaires donne une image de la topographie de l'objet observé : les creux apparaissent gris de plus en plus foncé, quand leur profondeur croît et les bosses en gris de plus en plus clair, quand leur hauteur augmente.

Le couplage du microscope électronique à un analyseur d'images permet d'afficher sur l'écran de l'analyseur une image digitalisée obtenue par intégration du signal vidéo sur un nombre d'images fixé par l'opérateur. Cette image digitalisée est décomposable en pixels (ou points images), auxquels un niveau de gris, compris entre O (= noir) et 255 (= blanc), est attribué par l'analyseur. Par comparaison, l'oeil humain n'est sensible qu'à une quarantaine de niveaux de gris.

Il est alors possible de traiter cette image pour en extraire les structures essentielles pouvant caractériser l'objet.

On définit le coefficient de rugosité linéaire, à partir de la notion de ligne de contour de surface qui désigne toute ligne joignant deux points éloignés sur la surface. La longueur de la ligne de contour est déterminée en pixels, à partir de l'histogramme des niveaux de gris caractéristiques du relief qu'elle parcourt. On divise alors la valeur obtenue par la longueur en pixels de la projection dans le plan de l'écran de la ligne de contour, c'est-à-dire du segment de droite joignant les deux points. Le rapport obtenu est le coefficient de rugosité linéaire. Il est supérieur ou égal à 1. Dans le cas d'une surface parfaitement lisse, il est égal à 1 et sa valeur augmente avec la rugosité de la surface. Cette mesure est effectuée sur plusieurs lignes de contour (une verticale, une horizontale et deux obliques). Cependant, la valeur seule de ce coefficient ne suffit pas pour caractériser la rugosité; en effet, la sensibilité de l'analyseur est telle que des variations de niveaux de gris correspondant à une variation de hauteur très faible sont détectées et donc une microrugosité à une échelle beaucoup plus petite que la taille de la particule peut être mise en évidence (due par exemple à la particule elle-même ou au bruit de fond). Cette microporosité faussant la mesure de la rugosité du relief, il est nécessaire de faire intervenir un filtrage d'images à l'aide d'un filtre médian.

L'utilisation d'un filtre médian consiste à déplacer sur l'écran pixel après pixel, une matrice carrée de taille variable définie préalablement par l'opérateur. L'ordinateur range dans l'ordre croissant les valeurs des niveaux de gris contenus dans la matrice et remplace le pixel central par une des valeurs contenues dans la matrice et fixée par l'opérateur. En général, on choisit la valeur du milieu.

A titre d'exemple, pour une matrice carrée de taille 3, 9 niveaux de gris sont rangés dans un ordre croissant et la cinquième valeur devient la nouvelle valeur du pixel central.

Plus la taille du filtre augmente et plus les objets qui disparaissent sont gros. Les variations de reliefs non ponctuelles sont donc observables lorsque la taille de filtre reste petite.

Afin d'apprécier l'homogénéité de structure interne des résines, on mesure le remplissage des grains en utilisant également des techniques de microscopie électronique à balayage (MEB) et d'analyse d'images.

Afin de déterminer l'homogénéité de garnissage d'un grain rempli de particules élémentaires, on utilise la valeur des niveaux de gris sur n'importe quelle ligne droite tracée sur la surface. Cette surface est obtenue par rabotage à froid à l'aide d'un couteau de verre de poudre de PVC enrobée dans une résine, ce qui permet de travailler sur des sections de grains. Si le grain est très garni et de façon homogène, alors il y a prédominance d'un niveau de gris (clair), correspondant à la récupération des électrons secondaires émis par les particules primaires sectionnées, c'est-à-dire émis dans le plan de coupe lui-même. Les trous interparticulaires seront représentés par des niveaux de gris plus foncés mais cependant encore relativement clairs puisque, le grain étant garni de façon homogène, la particule élémentaire située sur la couche inférieure est à faible profondeur.

Dans le cas d'un grain moins bien garni, il existera des cavités importantes et mal réparties entre les particules primaires sectionnées, placées dans le plan de coupe. Ceci sera représenté par des niveaux de gris très contrastés.

L'analyseur permet de connaître l'histogramme des niveaux de gris, mesurés sur n'importe quelle ligne tracée sur la surface de la section. La longueur de l'histogramme, représenté par une ligne brisée, est mesurée en pixels. En divisant cette valeur par la longueur de la ligne droite choisie, on obtient la valeur du coefficient de rugosité linéaire de la surface observée (que nous appelons coefficient d'hétérogénéité de garnissage car la surface observée est une section de grain) : plus il est éloigné de 1, plus la section est hétérogène.

Les résines vinyliques selon l'invention peuvent être préparées par polymérisation en émulsion suspendue et de préférence selon le procédé décrit dans la demande de brevet EPO286476 au nom de la demanderesse qui s'ajoute au contenu de présente demande.

Par polymérisation en émulsion suspendue on entend une polymérisation, en présence d'un système amorceur dont au moins l'un des constituants est hydrosoluble, d'au moins un monomère dans une phase aqueuse dispersée sous forme finement divisée dans ledit monomère.

Les photos annexées illustrent les différents aspects de l'invention et ont été obtenues à l'aide d'un microscope électronique à balayage.

La photo 1 illustre au grossissement 400 un grain de résine vinylique selon l'invention.

La photo 2 illustre au grossissement 400 un grain de résine vinylique préparée en suspension.

Les photos 3 et 4 illustrent au grossissement 1100 la section d'un grain de résine vinylique selon l'invention.

La photo 5 illustre au grossissement 1100 la section d'un grain de résine vinylique préparée en masse.

La photo 6 illustre au grossissement 1100 la section d'un grain de résine vinylique préparée en suspension.

Les exemples suivants illustrent l'invention sans toutefois la limiter :

Les exemples 1 à 8 concernent des résines vinyliques polymérisées en émulsion suspendue selon la demande de brevet EP0286476.

### EXEMPLE 1 (COMPARATIF)

Dans un réacteur vertical d'un litre de capacité en acier inoxydable, muni d'une double enveloppe à circulation de fluide échangeur de chaleur, d'un agitateur à turbine à six pales plates tournant à 700 trs/mn et d'un déflecteur, on introduit, après mise sous vide, 550 g de chlorure de vinyle (CV) et une solution aqueuse de 800 mg de persulfate de potassium dans 38 ml d'eau. On purge l'appareil par dégazage de 50 g de CV.

La température du milieu réactionnel est portée en 45 minutes à 56°C puis est maintenue constante; ceci correspond à une pression relative de 8,2 bars.

Après 2,5 heures de polymérisation à 56°C , la résine est dégazée et séchée. On recueille 75 g de chlorure de polyvinyle (PVC).

### EXEMPLE 2

L'appareillage et les conditions de polymérisation sont les mêmes que dans l'exemple 1, à ceci près que la solution de persulfate de potassium (800 mg) a été préparée à partir de 18 ml d'eau et que l'on introduit une solution aqueuse de 1 g d'acrylamide dans 20 ml d'eau, avant de procéder à la purge de l'appareil par dégazage de 50 g de CV.

Après 1,5 heures de polymérisation à 56°C, dégazage et séchage, on recueille 110 g de PVC.

### EXEMPLE 3 (COMPARATIF)

On procède dans les mêmes conditions que dans l'exemple 2 mais on remplace l'acrylamide par le méthylacrylamide.

Après deux heures de polymérisation à 56°C, séchage et dégazage, on recueille 95 g de PVC.

### EXEMPLE 4 (COMPARATIF)

L'appareillage est le même que dans l'exemple 1.

Dans le réacteur, on introduit, après mise sous vide, 550 g de CV et une solution aqueuse de 300 mg de persulfate de potassium, 33 mg de sulfate ferrique, 46,7 mg de peroxyde d'hydrogène et 100 mg d'acide ascorbique dans 38 ml d'eau. On purge l'appareil par dégazage de 50 g de CV.

La température du milieu réactionnel est portée à 70°C en 45 minutes puis est maintenue constante; ceci correspond à une pression relative de 11, 5 bars.

Après 15 minutes de polymérisation à 70°C, dégazage et séchage, on recueille 95 g de PVC dont la structure des grains correspond à celle des photos 1 et 3.

### EXEMPLE 5

L'appareillage et les conditions expérimentales sont les mêmes que dans l'exemple 4, à ceci près que 1 g d'acrylamide est ajouté au système d'amorçage, avant son introduction dans le réacteur.

Après 5 minutes de polymérisation à 70°C, dégazage et séchage, on recueille 140 g de PVC.

### EXEMPLE 6

Dans un prépolymériseur de 16 litres de capacité, en acier inoxydable, muni d'une double enveloppe à circulation de fluide échangeur de chaleur, d'un agitateur à turbine de type "Lightnin" à 6 pales plates tournant à 750 trs/mn et d'un déflecteur, on introduit, après mise sous vide, 8,9 kg de CV et une solution aqueuse de 9,6 g de persulfate de potassium, 1,06 g de sulfate ferrique, 1,5 g de peroxyde d'hydrogène, 3,2 g d'acide ascorbique et 12 g d'acrylamide dans 2,435 kg d'eau; on purge l'appareil par dégazage de 0,9 kg de CV.

La température du milieu réactionnel est portée en 40 minutes à 56°C et maintenue constante; ceci correspond à une pression relative de 8,2 bars dans le prépolymériseur.

Après 14 minutes de prépolymérisation, le taux de conversion étant voisin de 15%, on transfère le milieu réactionnel dans le polymériseur vertical de 25 litres de capacité, en acier inoxydable, muni d'une double enveloppe à circulation de fluide échangeur de chaleur. L'agitateur est constitué d'un ruban enroulé en spires hélicoïdales passant au voisinage des parois du polymériseur et fixé au moyen de trois supports sur un arbre rotatif traversant la partie supérieure du polymériseur selon son axe et solidaire, à son extrémité inférieure, d'un bras épousant la forme du fond bombé du polymériseur. La vitesse d'agitation est réglée à 100 trs/mn. La température du milieu réactionnel est portée en 30 minutes à 56°C et maintenue constante; ceci correspond à une pression relative de 8,2 bars dans le polymériseur.

Après 106 minutes de polymérisation à 56°C, dégazage et séchage, on recueille 6,320 kg de PVC dont la structure des grains correspond à celle des photos 1 et 4.

### EXEMPLE 7

L'appareillage et les conditions de polymérisation sont les mêmes que dans l'exemple 6, à ceci près que la vitesse de la turbine est de 1000 trs/mn.

Après 100 minutes de polymérisation à 56°C, dégazage et séchage, on recueille 5,840 kg de PVC.

### EXEMPLE 8

L'appareillage et les conditions de polymérisation sont les mêmes que dans l'exemple 6, à ceci près que la quantité de CV ajoutée au prépolymériseur est de 7,9 kg, que la solution aqueuse est constituée de 6,9 g de persulfate de potassium, 2,12 g de métabisulfite de potassium et de 10,1 g de colloïde (éthyl-hydroxyéthyl cellulose) dans 3,2 kg d'eau et que la température du milieu réactionnel, dans le polymériseur, est portée à 45°C en 30 minutes, par ailleurs, après le transfert dans le polymériseur, a été rajoutée une quantité supplémentaire de CV, égale à 4,9 kg.

Après 4 heures de polymérisation à 56°C, dégazage et séchage, on recueille 8,8 kg de PVC.

Les résines des Exemples 9 à 12 sont des résines commerciales ou des échantillons dont les caractéristiques sont réunies dans le Tableau 1.

Pour l'Exemple 9 : résine LACOVYL GB 1150 commercialisée par la Société ATOCHEM et préparée en masse dont la structure correspond à la photo 5.

Pour l'Exemple 10 : résine LACOVYL S 110 commercialisée par la Société ATOCHEM et préparée en masse.

Pour l'Exemple 11 : résine LACOVYL RB 8010 commercialisée par la Société ATOCHEM et préparée en masse.

Pour l'Exemple 12 : résine échantillonnée par la Société BF Goodrich préparée en suspension et dont la structure correspond aux photos 2 et 6.

### EVALUATION DE L'APTITUDE A LA TRANSFORMATION

On évalue l'aptitude à la transformation des résines dans 2 types d'appareils de transformation :
1) un malaxeur à cylindres dans les conditions suivantes :

| | |
|---|---|
| température | 170°C |
| vitesse des cylindres | 14 trs/mn |
| épaisseur entre les cylindres | 1 mm |

2) un malaxeur Brabender dans les conditions suivantes :

| | |
|---|---|
| cuve de 50 cm³ | |
| pales en Z | |
| vitesse de malaxage | 60 trs/mn |
| quantité de produit mis en oeuvre | 58 g |
| charge sur piston | 5 kg |

La résine à transformer est préalablement mélangée à divers ingrédients, dans les rapports en poids suivants :

| | |
|---|---|
| Résine | 100 parts |
| Lubrifiant interne (monostéarate de glycérol) | 1 part |
| Lubrifiant externe (cire artificielle) | 0,1 part |
| Plastifiant (dioctylphtalate alimentaire) | 6 parts |
| Stabilisant thermique (sel d'étain) | 1 part |

- Dans le cas d'une transformation sur malaxeur à cylindres, on mesure la durée de prise en feuille, pour les conditions décrites ci-dessus.
- Dans le cas d'une transformation sur malaxeur Brabender, on mesure le couple mécanique de la poudre, celui qui correspond au moment de la gélification ainsi que la durée de gélification ainsi que la température de gélification correspondante.

Le tableau 2 regroupe les différentes caractéristiques de transformation mesurée pour les résines des Exemples 5, 6, 8 et 9.

### EVALUATION DE LA COULABILITE

A l'aide d'un chronomètre, on mesure le temps que mettent 383,1 cm³ de résine pour s'écouler d'un entonnoir tronconique en acier inoxydable chromé (grand diamètre du cône 92,8 mm; petit diamètre (fond de l'entonnoir) : 9,5 mm; hauteur du cône : 114,3 mm).

On obture le fond de l'entonnoir à l'aide d'une plaquette et emplit l'entonnoir à l'aide d'une résine en versant celle-ci le long des parois pour éviter le tassement de la poudre.

Lorsque l'entonnoir est plein, on arase la poudre au sommet de l'entonnoir puis retire la plaquette obturant le fond et déclenche simultanément le chronomètre.

On laisse la poudre s'écouler librement et stoppe le chronomètre dès que l'entonnoir est vide, le temps d'écoulement exprimé en secondes correspond à la coulabilité de la résine.

Le tableau 3 indique les temps d'écoulement pour les résines des Exemples 2, 6, 8, 9, 10, 11 et 12.

### EVALUATION DE L'ASPECT DE SURFACE DES GRAINS

On examine les grains des différentes résines, vinyliques à l'aide d'un microscope électronique à balayage SEM 505 de la Société Philips. Les images obtenues sont traitées avec un analyseur d'images IBAS 2000 KONTRON®.

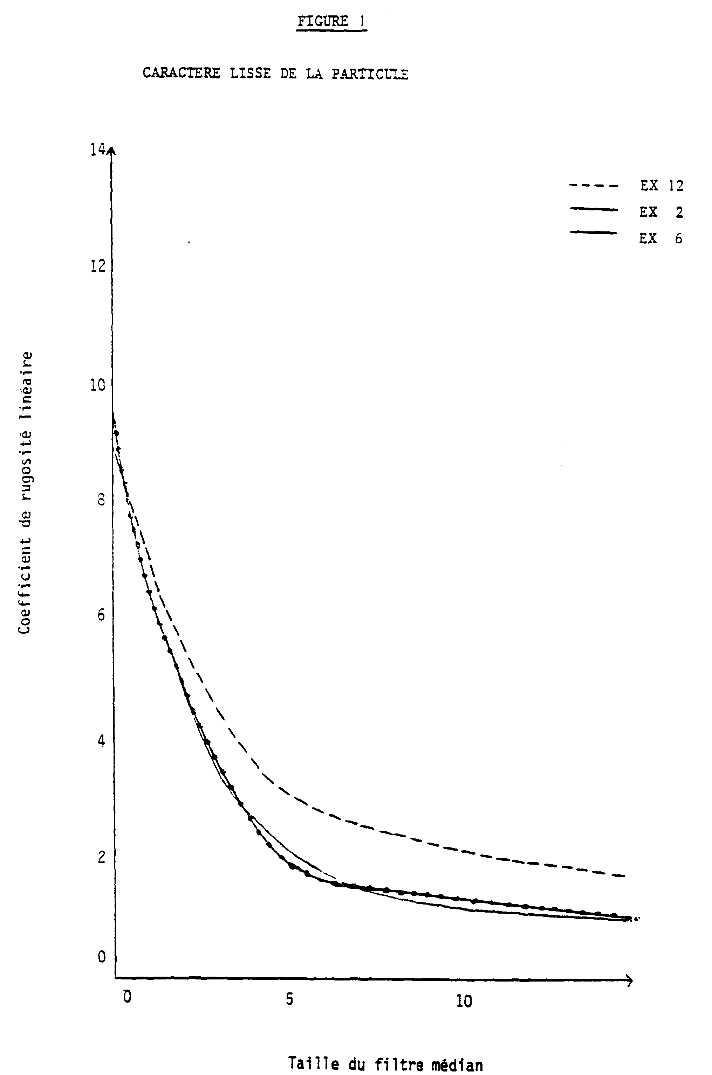

On calcule le coefficient de rugosité linéaire en fonction de la taille du filtre médian. Les courbes obtenues sont reprises à la Figure 1.

Pour les résines selon l'invention (Exemples 2, 6 et 8) le coefficient de rugosité linéaire tend vers 1 pour une taille de filtre égale à 7 alors que pour les résines des exemples 9 à 12, la même valeur est atteinte pour une taille de filtre égale à 15 qui correspond donc à un aspect de surface beaucoup moins lisse.

### EVALUATION DE L'HOMOGENEITE DE STRUCTURE INTERNE DES GRAINS

On examine l'intérieur des grains de différentes résines au MEB (SEM 505 de la Société Philips couplé avec un analyseur d'images IBAS 2000 KONTRON^{(R)}).

La poudre est enrobée dans de la colle à bois. Après durcissement, on effectue un rabotage au couteau de verre à - 60°C, de façon à ce que les particules élémentaires ne soient pas déformées par l'échauffement dû au passage du couteau. On métallise à l'or, de façon à limiter le phénomène de charge des électrons, liés au caractère isolant des résines vinyliques, lors de l'observation au MEB.

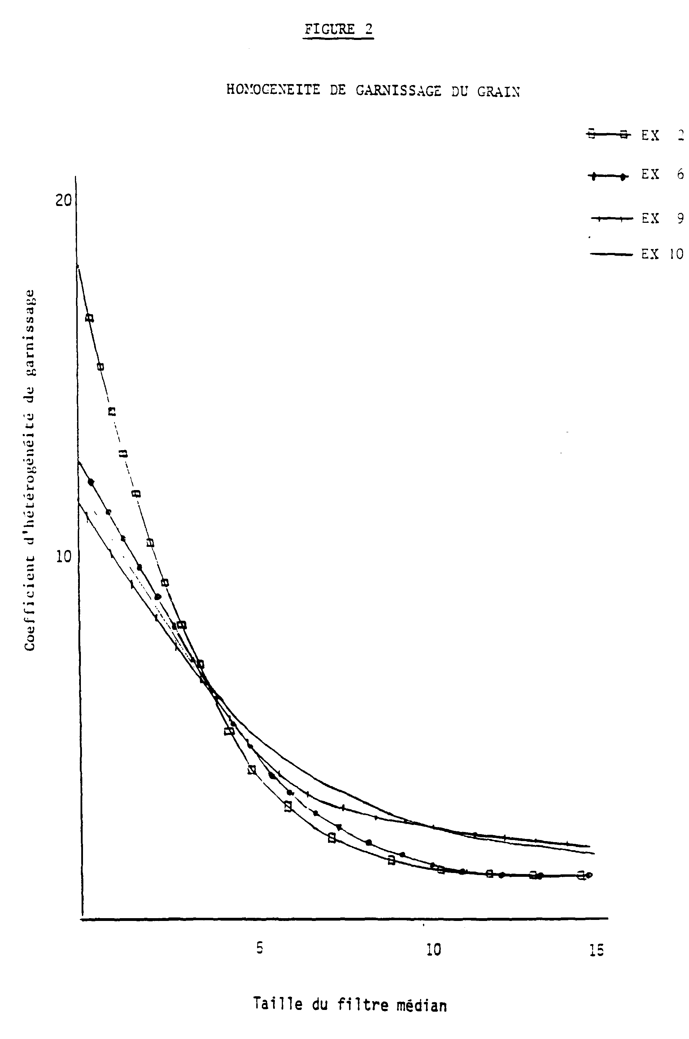

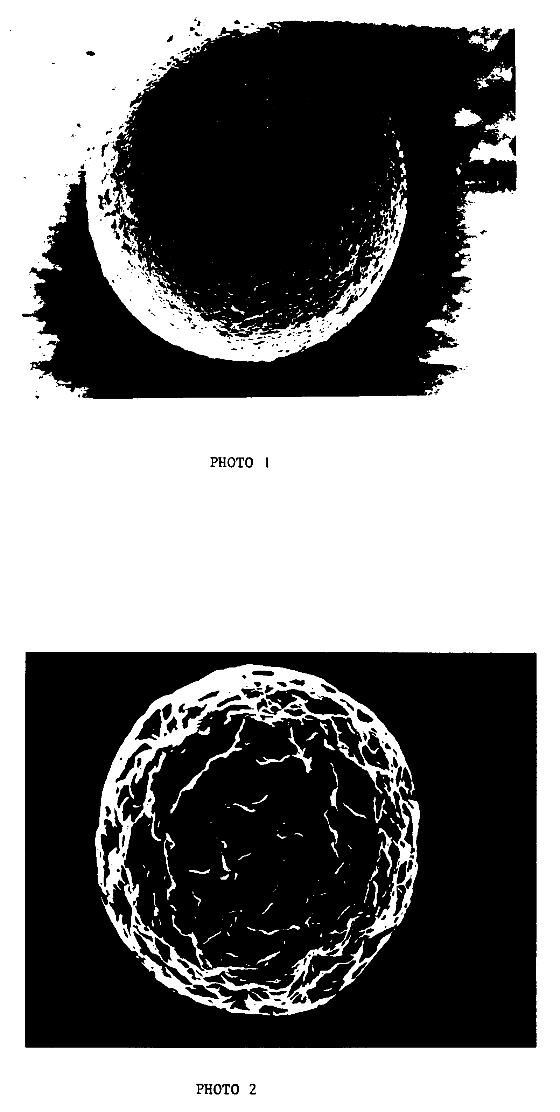

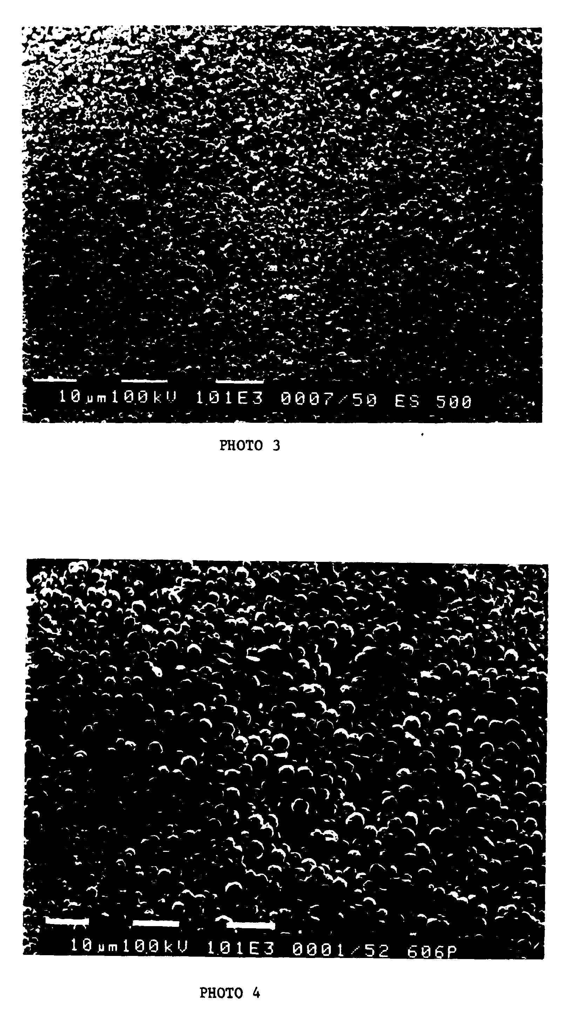

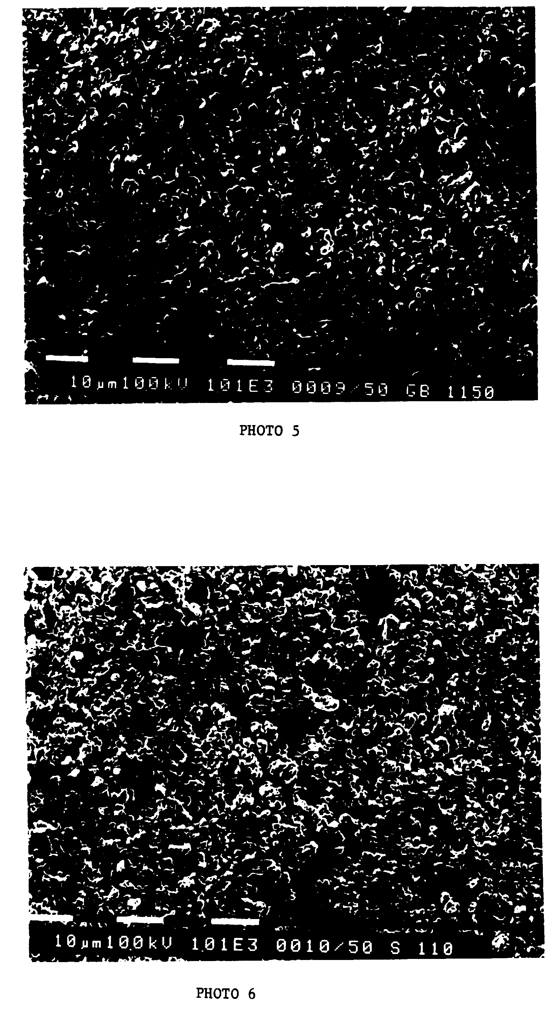

On calcule le coefficient d'hétérogénéité de garnissage en fonction de la taille du filtre médian. Les courbes obtenues sont réunies à la Figure 2.

Pour les résines selon l'invention (Exemples 2 et 6) on constate que le coefficient d'hétérogénéité de garnissage est inférieur à 1,2 pour une taille de filtre égale à 15 alors que pour les résines des Exemples 9 et 10, il est égal à 1,5. On constate également que la décroissance dudit coefficient avec la taille de filtre est beaucoup plus brutale pour les résines des Exemples 2 et 6.

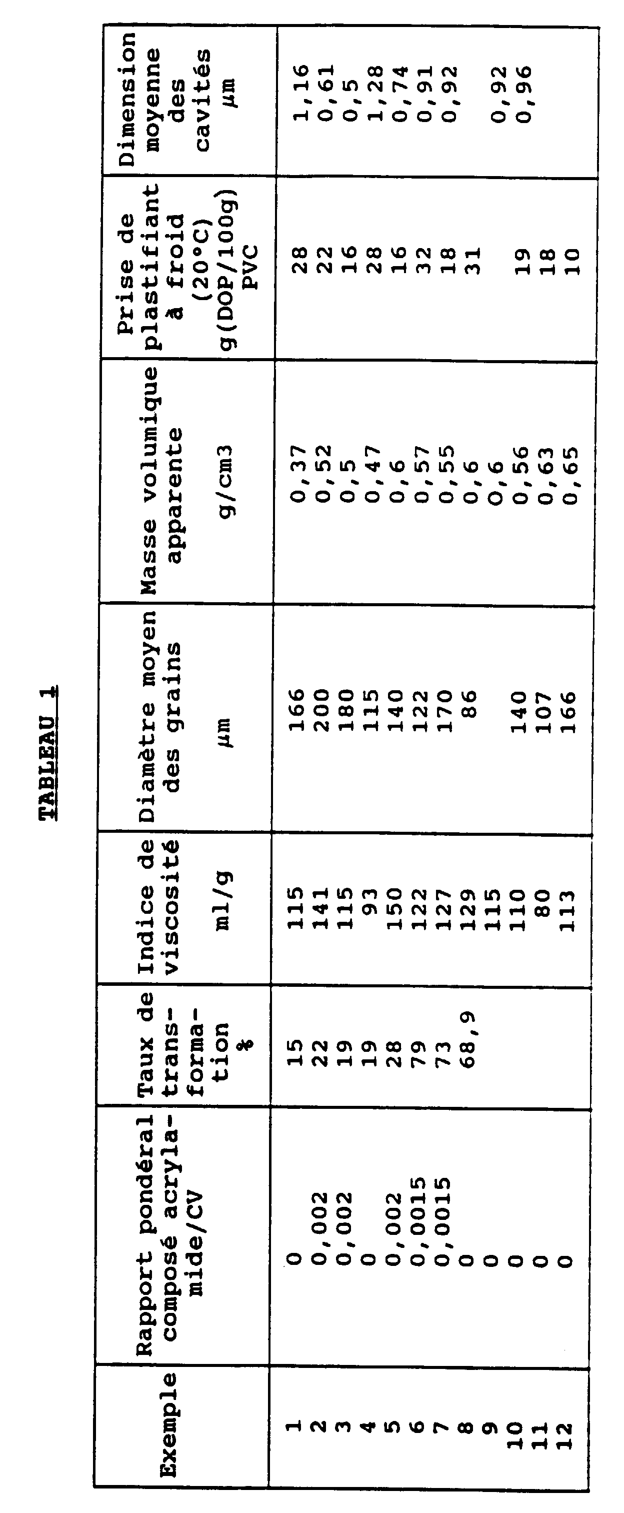

**TABLEAU 2**

| Caratéristiques de transformation | Exemples | | | |
|---|---|---|---|---|
| | 9 | 10 | 5 | 6 |
| **Malaxeur à cylindres** | | | | |
| Durée de prise en feuille(s) | 90 | 60 | 45 | 45 |

| **Malaxeur Brabender** | | | | |
|---|---|---|---|---|
| Couple poudre (kgm) | 1,733 | 2,033 | 3,166 | 3,5 |
| Couple gélification (kgm) | 4,71 | 4,817 | 4,883 | 4,95 |
| Temps de gélification (mn) | 3,25 | 1,68 | 0,68 | 0,69 |
| Température de gélification (°C) | 165 | 163 | 146 | 147 |

**TABLEAU 3**

| Exemple | Coulabilité(s) |
|---|---|
| 1 | 16 |
| 6 | 17 |
| 8 | 18 |
| 10 | 20 |
| 9 | 22 |
| 11 | 24 |
| 12 | 19 |

## Revendications

1. Polymères et résines vinyliques issus d'une composition comonomère constituée d'au moins 50% en poids de chlorure de vinyle et d'acrylamide jusqu'à 5% en poids et éventuellement d'au moins un comonomère choisi dans le groupe formé par le chlorure de vinylidène, le tétrafluoroéthylène, le chlorotrifluoroéthylène, les acrylates d'alkyle tels l'acrylate de méthyle, les méthacrylates d'alkyle tels le méthacrylate de méthyle, les oléfines telles l'éthylène, le propylène, pourvu que le copolymère formé soit essentiellement insoluble dans la composition comonomère qui n'a pas réagi se présentant sous forme de poudre constituée de grains individualisés caractérisés en ce que le coefficient de rugosité linéaire des grains est inférieur ou égal à 1, 2 pour une taille de filtre médian égale à 7 et en ce que le coefficient d'hétérogénéité de garnissage des grains est inférieur ou égal à 1,2 pour une taille de filtre médian égale à 15.

2. Polymères et résines vinyliques selon la revendication 1 caractérisés en ce qu'ils sont issus d'une composition comonomère à base de chlorure de vinyle contenant jusqu'à 5% en poids d'acrylamide et d'au moins une oléfine comprenant de 0,1 à 30% et de préférence de 0,1 à 10% en poids de ladite oléfine.

3. Polymères et résines vinyliques selon la revendication 1 caractérisés en ce qu'ils sont issus d'une composition comonomère à base de chlorure de vinyle contenant jusqu'& 5% en poids d'acrylamide et comprenant de 0,1 à 30% et de préférence de 0,1 à 15% en poids d'acétate de vinyle.

4. Polymères et résines vinyliques selon la revendication 1 caractérisés en ce qu'ils sont issus d'une composition comonomère à base de chlorure de vinyle contenant jusqu'à 5% en poids d'acrylamide et comprenant de 0,1 à 30% et de préférence de 0,1 à 20% en poids de chlorure de vinylidène.

5. Procédé de préparation des polymères et résines vinyliques tels que définis dans l'une quelconque des revendications 1 à 4, caractérisé en ce que la polymérisation de la composition comonomère s'effectue en émulsion suspendue.

## Patentansprüche

1. Vinylische Polymere und Harze, die sich von einer Comonomerenzusammensetzung ableiten, bestehend aus mindestens 50 Gew.-% Vinylchlorid und Acrylamid bis zu 5 Gew.-% und gegebenenfalls aus mindestens einem Comonomeren, ausgewählt aus der Gruppe von Vinylidenchlorid, Tetrafluorethylen, Chlortrifluorethylen, Alkylacrylaten wie Methylacrylat, Alkylmethacrylaten wie Methylmethacrylat und Olefinen wie Ethylen und Propylen, vorausgesetzt, daß das gebildete Copolymer im wesentlichen unlöslich ist in der Comonomerenzusammensetzung, die nicht reagiert hat und in Form eines Pulvers aus einzelnen Körnern vorliegt, dadurch gekennzeichnet, daß der lineare Rauhigkeitskoeffizient der Körner kleiner oder gleich 1,2 für eine mittlere Filtergröße von 7 ist und daß der Heterogenitätskoeffizient der Auskleidung der Körner kleiner oder gleich 1,2 für eine mittlere Filtergröße von 15 ist.

2. Vinylische Polymere und Harze nach Anspruch 1, dadurch gekennzeichnet, daß sie sich von einer Comonomerenzusammensetzung auf Basis von Vinylchlorid ableiten, die bis zu 5 Gew.-% Acrylamid und mindestens ein Olefin enthält und 0,1 bis 30 Gew.-%, vorzugsweise 0,1 bis 10 Gew.-%, dieses Olefins umfaßt.

3. Vinylische Polymere und Harze nach Anspruch 1, dadurch gekennzeichnet, daß sie sich von einer Comonomerenzusammensetzung auf Basis von Vinylchlorid ableiten, die bis zu 5 Gew.-% Acrylamid enthält und 0,1 bis 30 Gew.-%, vorzugsweise 0,1 bis 15 Gew.-%, Vinylacetat enthält.

4. Vinylische Polymere und Harze nach Anspruch 1, dadurch gekennzeichnet, daß sie sich von einer Comonomerenzusammensetzung auf Basis von Vinylchlorid ableiten, die bis zu 5 Gew.-% Acrylamid enthält und 0,1 bis 30 Gew.-%, vorzugsweise 0,1 bis 20 Gew.-%, Vinylidenchlorid enthält.

5. Verfahren zur Herstellung von vinylischen Polymeren und Harzen, wie in einem der Ansprüche 1 bis 4 definiert, dadurch gekennzeichnet, daß die Polymerisation der Comonomerenzusammensetzung in suspendierter Emulsion durchgeführt wird.

## Claims

1. Vinyl polymers and resins originating from a comonomer composition consisting of at least 50 % by weight of vinyl chloride and of acrylamide up to 5 % by weight and optionally of at least one comonomer chosen from the group made up of vinylidene chloride, tetrafluoroethylene, chlorotrifluoroethylene, alkyl acrylates such as methyl acrylate, alkyl methacrylates such as methyl methacrylate and olefins such as ethylene and propylene, provided that the copolymer formed is essentially insoluble in the comonomer composition which has not reacted, in the form of a powder consisting of individualized granules, characterized in that the linear roughness coefficient of the granules is lower than or equal to 1.2 at a median filter size of 7 and in that the packing heterogeneity coefficient of the granules is lower than or equal to 1.2 at a median filter size of 15.

2. Vinyl polymers and resins according to Claim 1, characterized in that they originate from a comonomer composition based on vinyl chloride containing up to 5 % by weight of acrylamide and at least one olefin including from 0.1 to 30 % and preferably from 0.1 to 10 % by weight of the said olefin.

3. Vinyl polymers and resins according to Claim 1, characterized in that they originate from a comonomer composition based on vinyl chloride containing up to 5 % by weight of acrylamide and including from 0.1 to 30 % and preferably from 0.1 to 15 % by weight of vinyl acetate.

4. Vinyl polymers and resins according to Claim 1, characterized in that they originate from a comonomer composition based on vinyl chloride containing up to 5 % by weight of acrylamide and including from 0.1 to 30 % and preferably from 0.1 to 20 % by weight of vinylidene chloride.

5. Process for the preparation of vinyl polymers and resins as defined in any one of Claims 1 to 4, characterized in that the polymerization of the comonomer composition takes place in suspended emulsion.
